# EUROPEAN PATENT APPLICATION

(11) **EP 1 739 869 A1**
(43) Date of publication of application: **03.01.2007**
(21) Application number: 06253449.0
(22) Date of filing: 30.06.2006
(51) Int. Cl.: H04H 1/00

(54) **Broadcast transmitter, broadcast receiver, method of transmitting broadcast signal, and method of performing reservation-recording of broadcast signal**

(30) Priority: 30.06.2005 KR 20050057708
(71) Applicant: Pantech&Curitel Communications, Inc., Seoul (KR)
(72) Inventor: jang, Joon Young, Seodaemun-gu, Seoul (KR)
(74) Representative: Mounteney, Simon James

(57) **Abstract**

The broadcast transmitter transmits broadcast content including reservation-recording information of future broadcast content to be broadcasted in the future. The broadcast receiver extracts the reservation-recording information from the broadcast content, which is currently broadcasted, in response to a user's operation, sets a reservation-recording function, and records the future broadcast content when it is broadcasted afterwards, so that a user can record desired broadcast content at a desired time conveniently in the broadcast receiver with a simple key operation.

## Description

### BACKGROUND OF THE INVENTION

This application claims the priority of Korean Patent Application No. 2005-57708, filed on June 30, 2005, in the Korean Intellectual Property Office, the disclosure of which is incorporated herein in its entirety by reference.

### 1. Field of the Invention

The present invention relates to a broadcast transmitter, a broadcast receiver, a method of transmitting a broadcast signal, and a method of performing reservation-recording of a broadcast signal.

### 2. Description of Related Art

In a conventional method of performing reservation-recording of a broadcast signal, a user sets a reservation-recording function to perform reservation-recording of desired broadcast programs using a broadcast receiver by viewing an electronic programming guide (EPG) transmitted from a broadcast transmitter and entering desired broadcast time/broadcast channel or hot code in a reservation-recording menu using a keypad of the broadcast receiver. When the desired broadcast program is broadcasted on the set broadcast channel at the set broadcast time, the broadcast receiver records and stores the broadcast program in its memory so that the user can play back and view the recorded broadcast program.

However, the above-mentioned conventional reservation-recording method has a problem in that when a user performs reservation-recording of desired broadcast programs, the user should access a reservation-recording menu through a complex key operation and then enter broadcast time/broadcast channel or hot code recorded in the EPG.

### SUMMARY OF THE INVENTION

The present invention provides a broadcast transmitter transmitting a broadcast signal including reservation-recording information and a method of transmitting the broadcast signal so that a user can perform reservation-recording of broadcast content with a simple key operation in a broadcast receiver.

The present invention also provides a broadcast receiver, which extracts reservation-recording information from a broadcast signal including the reservation-recording information transmitted from a broadcast transmitter and sets a reservation-recording function, and a method of performing reservation-recording of broadcast content so that a user can perform reservation-recording of broadcast content with a simple key operation in the broadcast receiver.

According to an aspect of the present invention, there is provided a broadcast transmitter transmitting broadcast content including reservation-recording information of future broadcast content to be broadcasted in the future.

The broadcast transmitter may include: an FIC (Fast Information Channel) processor processing FIC data services, multi-control data, and broadcast service information; a reservation-recording information processor processing so that reservation-recording information can be included in the broadcast service information processed by the FIC processor; and a broadcast signal generator outputting a DMB signal including the reservation-recording information.

The broadcast transmitter may further include: a data service processor processing text data; an audio service processor processing audio data; a video service processor processing video data; a main service multiplexer multiplexing the text data processed by the data service processor, the audio data processed by the audio service processor, and the video data processed by the video service processor into an MSC (main service channel); and a transmission frame multiplexer multiplexing data processed by the FIC processor and data multiplexed into the MSC by the main service multiplexer into a single transmission frame.

The broadcast transmitter may include: an FIC processor processing FIC data services, multi-control data, and broadcast service information; a data service processor processing text data; a reservation-recording information processor processing so that reservation-recording information can be included in the text data processed by the data service processor; and a broadcast signal generator outputting a DMB signal including the reservation-recording information.

The broadcast transmitter may further include: an audio service processor processing audio data; a video service processor processing video data; a main service multiplexer multiplexing the text data processed by the data service processor, the audio data processed by the audio service processor, and the video data processed by the video service processor into an MSC; and a transmission frame multiplexer multiplexing data processed by the FIC processor and data multiplexed into the MSC by the main service multiplexer into a single transmission frame.

The broadcast signal generator may convert the data multiplexed into the transmission frame by the transmission frame multiplexer into an OFDM signal and output a DMB signal.

According to another aspect of the present invention, there is provided a broadcast receiver which extracts reservation-recording information of future broadcast content to be broadcasted in the future from current broadcast content in response to a user's operation, sets a reservation-recording function, and records the future broadcast content when the future broadcast content is broadcasted.

The broadcast receiver may include: a DMB tuner converting a DMB frequency band signal received via an antenna into a baseband orthogonal (I/Q) signal; a demodulation/error correction unit which selects a channel from the orthogonal (I/Q) signal, extracts original data corresponding to the selected channel, and performs an error correction process on the extracted data to output TS (Transport Stream) data; a decoder which divides the TS data outputted from the demodulation/error correction unit into an audio signal and a video signal, decodes the divided audio and video signals, and outputs the decoded video and audio signals; an audio codec converting the decoded audio signal outputted from the decoder into an analog voice signal; a controller receiving the DMB signal and controlling processing of the DMB signal; an information extracting unit extracting information necessary for reservation-recording from the TS data outputted from the demodulation/error correction unit in response to a user's operation; and a reservation recorder which sets a reservation-recording function according to the reservation-recording information extracted by the information extracting unit, records and stores the broadcast content in a memory when the broadcast content is broadcasted.

The reservation recorder may record broadcast content broadcasted via a channel corresponding to the broadcast channel information included in the reservation-recording information at the time recorded in the broadcast time information included in the reservation-recording information, and store the recorded broadcast content in a memory.

The broadcast receiver may include: a DMB tuner converting a DMB frequency band signal received via an antenna into a baseband orthogonal (I/Q) signal; a demodulation/error correction unit which selects a channel from the orthogonal (I/Q) signal, extracts original data corresponding to the selected channel, and performs an error correction process on the extracted data to output TS data; a decoder which divides the TS data outputted from the demodulation/error correction unit into an audio signal and a video signal, decodes the divided audio and video signals, and outputs the decoded video and audio signals; an audio codec converting the decoded audio signal outputted from the decoder into an analog voice signal; a controller receiving the DMB signal and controlling processing of the DMB signal; an information extracting unit extracting information necessary for reservation-recording from the TS data outputted from the demodulation/error correction unit in response to a user's operation; and a reservation recorder which sets a reservation-recording function according to the reservation-recording information extracted by the information extracting unit, records and stores the broadcast content in a memory when the broadcast content is broadcasted.

The reservation recorder may determine whether or not current broadcast content corresponds to the assigned unique identification code by making reference to broadcast service information of the current broadcast content, and, if the current broadcast content corresponds to the unique identification code, record and store the current broadcast content in a memory.

According to still another aspect of the present invention, there is provided a mobile communication terminal equipped with the broadcast receiver.

According to a further aspect of the present invention, there is provided a method of transmitting a broadcast signal in a broadcast transmitter, the method including the operations of: including reservation-recording information of future broadcast content, which is to be broadcasted in the future, in current broadcast content; and transmitting the current broadcast content including the reservation-recording information.

According to anther aspect of the present invention, there is provided a method of performing reservation-recording in a broadcast receiver, the method including the operations of: extracting reservation-recording information of future broadcast content, which is to be broadcasted in the future, from current broadcast content in response to a user's operation; setting a reservation-recording function according to the reservation-recording information; and recording the future broadcast content when the future broadcast content is broadcasted.

The broadcast content including the reservation-recording information may be a preview for the future broadcast content.

The reservation-recording information may include information on broadcast time and broadcast channel of the future broadcast content.

The reservation-recording information may be a unique identification code assigned to identify the future broadcast content.

The broadcast content may be DMB (Digital Multimedia Broadcasting) content.

The reservation-recording information may be included in a BIFS (Binary Format for Scene) field of a DMB signal.

The reservation-recording information may be included in a Data field of the DMB signal.

### BRIEF DESCRIPTION OF THE DRAWINGS

The above and other features and advantages of the present invention will become more apparent by describing in detail exemplary embodiments thereof with reference to the attached drawings in which:
FIG. 1A is a block diagram of a broadcast transmitter in accordance with an embodiment of the present invention;
FIG. 1B is a block diagram of a broadcast transmitter in accordance with another embodiment of the present invention;
FIG. 2 is a block diagram of a broadcast receiver in accordance with still another embodiment of the present invention;
FIG. 3 is a data structure of a DMB signal transmitted from the broadcast transmitter in accordance with the present invention;
FIG. 4 is a flow chart of a method of transmitting a broadcast signal in the broadcast transmitter in accordance with another embodiment of the present invention; and
FIG. 5 is a flow chart of a method of performing reservation-recording of broadcast content in the broadcast receiver in accordance with another embodiment of the present invention.

### DETAILED DESCRIPTION OF THE INVENTION

Exemplary embodiments in accordance with the present invention will now be described in detail with reference to the accompanying drawings.

A broadcast transmitter and a broadcast receiver according to the present invention will now be described.

The broadcast transmitter transmits current broadcast content, which is currently broadcasted, including reservation-recording information of future broadcast content to be broadcasted in the future. Meanwhile, the broadcast receiver extracts the reservation-recording information of the future broadcast content from the current broadcast content in response to a user's operation, sets a reservation-recording function, and records the future broadcast content when it is broadcasted afterwards. Accordingly, the present invention allows a user to make a reservation-recording of broadcast content conveniently in the broadcast receiver with a simple key operation.

In this case, the current broadcast content including the reservation-recording information which is transmitted from the broadcast transmitter and broadcasted in the broadcast receiver is preferably a preview for the future broadcast content to be broadcasted in the future.

That is, the broadcast transmitter transmits a preview including reservation-recording information on future broadcast content to be broadcasted in the future, while the broadcast receiver extracts the reservation-recording information from the preview in response to a user's operation, sets a reservation-recording function, and records the future broadcast content when it is broadcasted afterwards. Accordingly, the user can record desired broadcast content at a desired time conveniently in the broadcast receiver with a simple key operation.

Meanwhile, the reservation-recording information preferably includes information on broadcast time/channel of future broadcast content to be broadcasted in the future.

Accordingly, the broadcast transmitter transmits broadcast content including the reservation-recording information containing the broadcast time/channel information of future broadcast content to be broadcasted in the future, while the broadcast receiver extracts the broadcast time/channel information contained in the reservation-recording information of the current broadcast content in response to a user's operation, sets a reservation-recording function, and records the future broadcast content when it is broadcasted from a channel corresponding to the broadcast channel information at the time recorded in the broadcast time information. Accordingly, the user can record desired broadcast content at a desired time conveniently in the broadcast receiver with a simple key operation.

Alternatively, the reservation-recording information may include a unique identification code assigned to identify broadcast content to be broadcasted in the future.

In this case, the broadcast transmitter transmits broadcast content including the reservation-recording information containing a unique identification code assigned to identify future broadcast content to be broadcasted in the future, while the broadcast receiver extracts the unique identification code contained in the reservation-recording information of the current broadcast content in response to a user's operation, sets a reservation-recording function, and records the future broadcast content when it corresponds to the unique identification code by making reference to broadcast service information of the current broadcast content. Accordingly, the user can record desired broadcast content at a desired time conveniently in the broadcast receiver with a simple key operation.

Meanwhile, examples of the broadcast content include digital multimedia broadcasting (DMB) content and analog broadcasting content. The reservation-recording information may be recorded in a data area for broadcast service information contained in broadcast control data or data services.

For example, if the broadcast content is DMB content, the reservation-recording information may be included in a BIFS (Binary Format for Scene) field of a DMB signal, or in a Data field for a data service, which will be described below in detail. The BIFS field is an area for recording information on arranging objects on a display.

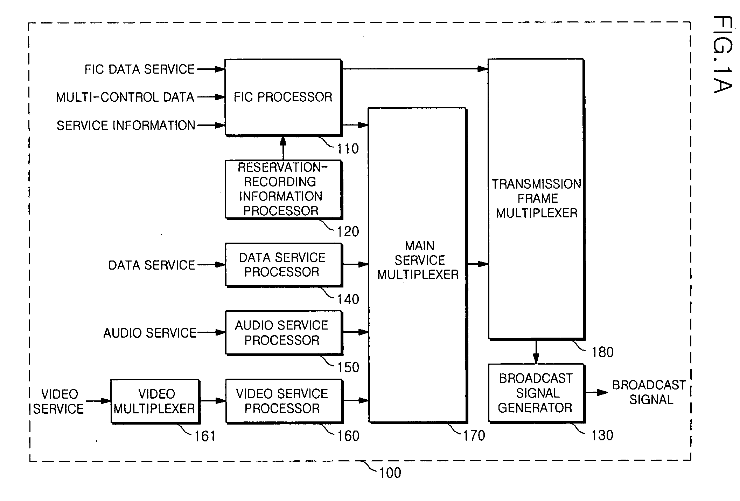

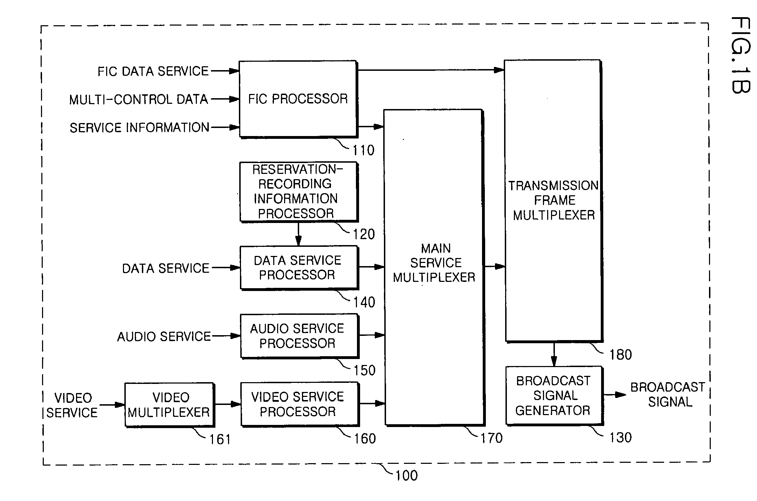

FIGS. 1A and 1B are block diagrams of the broadcast transmitter according to an embodiment of the present invention.

In FIG. 1A, the reservation-recording information is included in a BIFS field of a DMB signal.

A broadcast transmitter 100 includes a Fast Information Channel (FIC) processor 110, a reservation-recording information processor 120, and a broadcast signal generator 130.

The FIC processor 110 processes data for FIC data service, multi-control data, and broadcast service information. The FIC data service implies a high-rate data service transmitted in a narrow bandwidth, such as traffic information or emergency warning signals. The multi-control data is control information on multiplexing broadcast services, such as audio/video/text services, transmitted through a DMB system. The broadcast service information is supplementary information related to broadcast programs, i.e., meta-information such as broadcast program names or the cast.

The reservation-recording information processor 120 processes such that reservation-recording information is included in the broadcast service information processed by the FIC processor 110.

The broadcast signal generator 130 outputs a DMB signal including the reservation-recording information.

That is, according to the present embodiment, the broadcast transmitter transmits the DMB signal containing the reservation-recording information, while the broadcast receiver extracts the reservation-recording information from the received DMB signal, sets a reservation-recording function and records broadcast content according to the reservation-recording information. Accordingly, a user can record desired broadcast content at a desired time conveniently in the broadcast receiver with a simple key operation.

In this case, the DMB signal including the reservation-recording information transmitted from the broadcast transmitter is preferably a preview for future broadcast content to be broadcasted in the future.

That is, the broadcast transmitter transmits a preview including reservation-recording information on DMB content to be broadcasted in the future, while the broadcast receiver extracts the reservation-recording information on the DMB content from the preview in response to a user's operation, sets a reservation-recording function, and records the DMB content when it is broadcasted afterwards. Accordingly, the user can record desired broadcast content at a desired time conveniently in the broadcast receiver with a simple key operation.

Meanwhile, the reservation-recording information preferably includes information on broadcast time/channel of DMB content to be broadcasted in the future.

Accordingly, the broadcast transmitter transmits current DMB content including the reservation-recording information containing the broadcast time/channel information of future DMB content to be broadcasted in the future, while the broadcast receiver extracts the broadcast time/channel information contained in the reservation-recording information of the current DMB content in response to a user's operation, sets a reservation-recording function, and records the future DMB content when it is broadcasted from a channel corresponding to the broadcast channel information at the time recorded in the broadcast time information. Accordingly, the user can record desired broadcast content at a desired time conveniently in the broadcast receiver with a simple key operation.

Alternatively, the reservation-recording information may include a unique identification code assigned to identify DMB content to be broadcasted in the future.

In this case, the broadcast transmitter transmits DMB content including the reservation-recording information containing a unique identification code assigned to identify future DMB content to be broadcasted in the future, while the broadcast receiver extracts the unique identification code contained in the reservation-recording information of the current DMB content in response to a user's operation, sets a reservation-recording function, and records the future DMB content when it corresponds to the unique identification information by making reference to broadcast service information of the current DMB content. Accordingly, the user can record desired broadcast content at a desired time conveniently in the broadcast receiver with a simple key operation.

Meanwhile, according to another embodiment of the present invention, the broadcast transmitter 100 further includes a data service processor 140, an audio service processor 150, a video service processor 160, a main service multiplexer 170, and a transmission frame multiplexer 180.

The data service processor 140 processes text data. The audio service processor 150 processes audio data. The video service processor 160 processes video data. Video services include video data, audio data, and multiplexing/synchronizing information. Thus, the video service is processed into a single stream by a video multiplexer 161 before it is input to the video service processor 160, and is then transmitted to a sub-channel using a DMB stream mode.

The main service multiplexer 170 multiplexes text data processed by the data service processor 140, audio data processed by the audio service processor 150, and video data processed by the video service processor 160 into a main service channel (MSC).

The transmission frame multiplexer 180 multiplexes the data processed by the FIC processor 110 and the data multiplexed into the MSC by the main service multiplexer 170 into a single transmission frame.

At this time, it is preferable that a broadcast signal generator 130 converts data multiplexed into a single transmission frame by the transmission frame multiplexer 180 into an orthogonal frequency division multiplexing (OFDM) signal and outputs a DMB signal.

That is, the broadcast transmitter 100 processes data for the FIC data service, multi-control data, and broadcast service information using the FIC processor 110, processes text data using the data service processor 140, processes audio data using the audio service processor 150, and processes video data using the video service processor 160. The text data processed by the data service processor 140, the audio data processed by the audio service processor 150, and the video data processed by the video service processor 160 are multiplexed by the main service multiplexer 170 into the MSC.

Meanwhile, data processed by the FIC processor 110 and data multiplexed into the MSC by the main service multiplexer 170 are multiplexed into a single transmission frame by the transmission frame multiplexer 180, which is converted into an OFDM signal by the broadcast signal generator 130 and is output as a DMB signal to provide multimedia digital broadcast to the broadcast receiver 200.

At this time, the broadcast transmitter 100 provides a preview to the broadcast receiver 200 according to the above-mentioned procedure before actual broadcast content corresponding to the preview is broadcasted. The reservation-recording information processor 120 adds information necessary for reservation-recording, such as broadcast time/channel information on the actual broadcast content corresponding to the preview, to broadcast service information of the preview processed by the FIC processor 110.

Accordingly, the reservation-recording information is included in the DMB signal, which is multiplexed into a single transmission frame by the transmission frame multiplexer 180 and is then converted into the OFDM signal by the broadcast signal generator 130, and is then provided to the broadcast receiver 200.

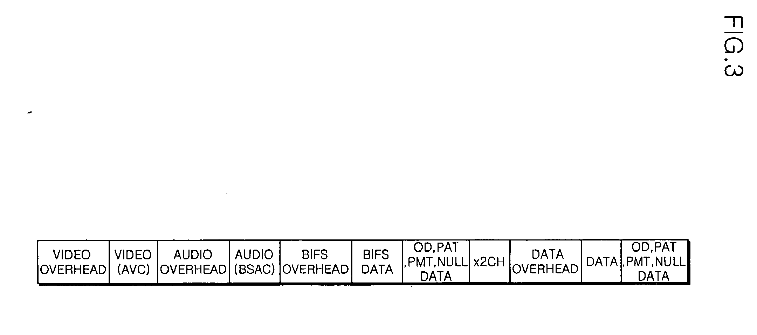

FIG. 3 is an example of a data structure of the DMB signal outputted by the broadcast signal generator 130.

A video overhead field and a video AVC field are areas for recording data for video services. An audio overhead field and an audio BSAC field are areas for recording data for audio services. A BIFS overhead field and a BIFS data field are areas for recording information for arranging objects on a display. A data overhead field and a data field are areas for recording data for data services. Object Descriptor (OD) indicates a first access point of a stream. Program Association Table (PAT) indicates a start point of multiplexing information. Program Map Table (PMT) indicates a position of a broadcast stream which is needed for a user to view a broadcast program.

In FIG. 1B, the reservation-recording information is included in a Data field of a DMB signal.

The broadcast transmitter 100 according to the present embodiment has the same construction as that according to the embodiment shown in FIG. 1A. However, the reservation-recording information processor 120 in the embodiment shown in FIG. 1A processes such that reservation-recording information is included in broadcast service information processed by the FIC processor 110, while the reservation-recording information processor 120 in the embodiment of FIG. 1B processes such that reservation-recording information is included in text data processed by the data service processor 140. Other components of FIG. 1B are the same as those of FIG. 1A, and a detailed description thereof will thus be omitted herein.

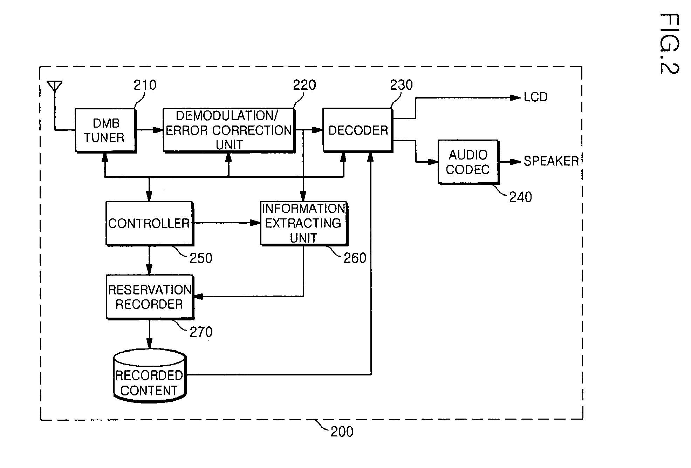

FIG. 2 is a block diagram of a broadcast receiver in accordance with another embodiment of the present invention.

A broadcast receiver 200 according to the present embodiment includes a DMB tuner 210, a demodulation/error correction unit 220, a decoder 230, an audio codec 240, a controller 250, an information extracting unit 260, and a reservation recorder 270.

The DMB tuner 210 converts a DMB frequency band signal received via an antenna into a baseband orthogonal (I/Q) signal.

For example, when a terrestrial DMB signal having a bandwidth of about 30 to 300 MHz is received via an antenna, the broadcast receiver 200 converts the DMB signal received through the DMB tuner 210 into a baseband orthogonal (I/Q) signal (Walsh code).

The demodulation/error correction unit 220 selects a channel from the orthogonal (I/Q) signal, extracts original data corresponding to the selected channel, and performs an error correction process on the extracted data to output Transport Stream (TS) data.

Since the Walsh code acts as an identifier for identifying a channel in a CDM (Code Division Multiplexing) forward link, the broadcast receiver 200 selects a channel from the orthogonal (I/Q) signal (Walsh code) through the demodulation/error correction unit 220, and extracts original data corresponding to the selected channel.

Since DMB is a unidirectional communication medium, it is not possible to send a retransmission request upon occurrence of an error. Thus, the broadcast receiver 200 processes a Forward Error Correction (FEC) process on the extracted original data using the demodulation/error correction unit 220 to output TS data.

TS is a standard allowing a digital broadcast system to transmit video/audio streams. The video/audio streams of programs are multiplexed in units of packet using error correction codes and then are transmitted.

The decoder 230 divides the TS data outputted from the demodulation/error correction unit 220 into an audio signal and a video signal, decodes the divided audio and video signals, and outputs the decoded video and audio signals. The audio codec 240 converts the decoded audio signal outputted from the decoder 230 into an analog voice signal. The controller 250 receives the DMB signal, and controls a DMB process.

The broadcast receiver 200 converts a DMB frequency band signal into a baseband signal by means of the DMB tuner 210 under the control of the controller 250. The broadcast receiver 200 divides TS data outputted from the demodulation/error correction unit 220 into audio compression data and video compression data by means of the decoder 230, and decodes the divided audio compression data and the video compression data into an audio signal and a video signal, respectively. The video signal outputted from the decoder 239 is displayed on a liquid crystal display (LCD) device and the analog voice signal converted by the audio codec 240 is output via a speaker.

At this time, the broadcast content currently broadcasted by the broadcast receiver 200 may be a preview for future broadcast content to be broadcasted in the future. Accordingly, the broadcast receiver 200 performs the following process for the preview in addition to the above-mentioned typical broadcast process.

The information extracting unit 260 extracts information necessary for reservation-recording from the TS data outputted from the demodulation/error correction unit 220 under the control of the controller 250 according to a user's selection when the preview is broadcasted.

At this time, the reservation-recording information preferably includes information on broadcast time/channel of future broadcast content to be broadcasted in the future. Alternatively, the reservation-recording information may include a unique identification code assigned to identify future broadcast content to be broadcasted in the future.

That is, the DMB signal of the preview multiplexed as shown in FIG. 3 includes reservation-recording information. Accordingly, when a user receiving the preview selects a reservation-recording function with a simple key operation, such as pressing a predetermined reservation-recording button, the broadcast receiver 200 extracts by means of the information extracting unit 260 reservation-recording information, such as actual broadcast time/channel corresponding to the preview or a unique identification code assigned to identify broadcast content to be broadcasted in the future, from the TS data outputted from the demodulation/error correction unit 220.

The reservation recorder 270 records and stores the actual broadcast content in its memory according to the reservation-recording information extracted by the information extracting unit 260 under the control of the controller 250 when the actual broadcast content corresponding to the preview is broadcasted. For example, the reservation recorder 270 may record and store the actual broadcast content in its memory according to the broadcast time/channel information extracted from the information extracting unit 260.

That is, when the broadcast receiver 200 extracts information necessary for reservation-recording, such as actual broadcast time/channel information corresponding to the preview, the broadcast receiver 200 records the actual broadcast content broadcasted over the broadcast channel at the actual broadcast time by means of the reservation recorder 270 and stores it in its memory. Accordingly, a user can record desired broadcast content at a desired time conveniently in the broadcast receiver with a simple key operation.

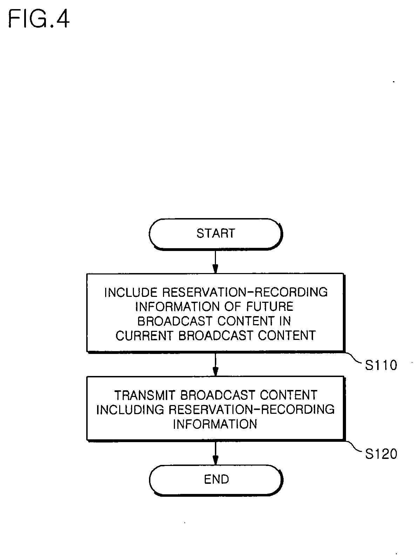

FIG. 4 is a flow chart of a method of transmitting a broadcast signal in a broadcast transmitter in accordance with an embodiment of the present invention.

In operation S110, the broadcast transmitter includes reservation-recording information of future broadcast content to be broadcasted in the future in current broadcast content.

In operation S120, the broadcast transmitter transmits the current broadcast content including the reservation-recording information.

Accordingly, the broadcast transmitter transmits the current broadcast content including the reservation-recording information of the future broadcast content to be broadcasted in the future, while the broadcast receiver extracts the reservation-recording information contained in the current broadcast content in response to a user's operation, sets a reservation-recording function, and records the future broadcast content when it is broadcasted afterwards. Accordingly, the user can record desired broadcast content at a desired time conveniently in the broadcast receiver with a simple key operation.

At this time, the broadcast content including the reservation-recording information is preferably a preview for the future broadcast content to be broadcasted in the future.

That is, the broadcast transmitter transmits a preview including reservation-recording information on future broadcast content to be broadcasted in the future, while the broadcast receiver extracts the reservation-recording information from the preview in response to a user's operation, sets a reservation-recording function, and records the future broadcast content when it is broadcasted afterwards. Accordingly, the user can record desired broadcast content at a desired time conveniently in the broadcast receiver with a simple key operation.

Meanwhile, the reservation-recording information preferably includes information on broadcast time/channel of the future broadcast content to be broadcasted in the future.

Accordingly, the broadcast transmitter transmits broadcast content including the reservation-recording information containing the broadcast time/channel information of the future broadcast content to be broadcasted in the future, while the broadcast receiver extracts the broadcast time/channel information of the current broadcast content in response to a user's operation, sets a reservation-recording function, and records the future broadcast content when it is broadcasted from a channel corresponding to the broadcast channel information at the time recorded in the broadcast time information. Accordingly, the user can record desired broadcast content at a desired time conveniently in the broadcast receiver with a simple key operation.

Alternatively, the reservation-recording information may include a unique identification code assigned to identify broadcast content to be broadcasted in the future.

In this case, the broadcast transmitter transmits broadcast content including the reservation-recording information containing a unique identification code assigned to identify future broadcast content to be broadcasted in the future, while the broadcast receiver extracts the unique identification code contained in the reservation-recording information of the current broadcast content in response to a user's operation, sets a reservation-recording function, and records the future broadcast content when it corresponds to the unique identification code by making reference to broadcast service information of the current broadcast content. Accordingly, the user can record desired broadcast content at a desired time conveniently in the broadcast receiver with a simple key operation.

Meanwhile, examples of the broadcast content include DMB content and analog broadcasting content. The reservation-recording information may be recorded in a data area for broadcast service information contained in broadcast control data or data services.

For example, if the broadcast content is DMB content, the reservation-recording information may be included in a BIFS (Binary Format for Scene) field of a DMB signal, or in a Data field for a data service. The BIFS field is an area for recording information for arranging objects on a display.

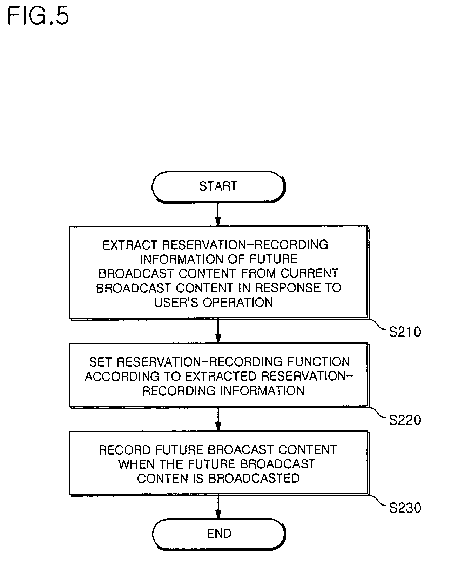

FIG. 5 is a flow chart of a method of performing reservation-recording of broadcast content in the broadcast receiver in accordance with an embodiment of the present invention.

In operation S210, the broadcast receiver extracts reservation-recording information contained in future broadcast content to be broadcasted in the future from current broadcast content in response to user's operation.

In operation S220, the broadcast receiver sets a reservation-recording function according to the reservation-recording information.

In operation S230, the broadcast receiver records the future broadcast content when it is broadcasted afterwards.

Accordingly, the broadcast transmitter transmits the current broadcast content including the reservation-recording information of the future broadcast content to be broadcasted in the future, while the broadcast receiver extracts the reservation-recording information contained in the current broadcast content in response to a user's operation, sets a reservation-recording function, and records the future broadcast content when it is broadcasted afterwards. Accordingly, the user can record desired broadcast content at a desired time conveniently in the broadcast receiver with a simple key operation.

At this time, the current broadcast content including the reservation-recording information is preferably a preview for the future broadcast content to be broadcasted in the future.

That is, the broadcast transmitter transmits a preview including reservation-recording information on future broadcast content to be broadcasted in the future, while the broadcast receiver extracts the reservation-recording information from the preview in response to a user's operation, sets a reservation-recording function, and records the future broadcast content when it is broadcasted afterwards. Accordingly, the user can record desired broadcast content at a desired time conveniently in the broadcast receiver with a simple key operation.

Meanwhile, the reservation-recording information preferably includes information on broadcast time/channel of future broadcast content to be broadcasted in the future.

Accordingly, the broadcast transmitter transmits broadcast content including the reservation-recording information containing the broadcast time/channel information of future broadcast content to be broadcasted in the future, while the broadcast receiver extracts the broadcast time/channel information contained in the reservation-recording information of the current broadcast content in response to a user's operation, sets a reservation-recording function, and records the future broadcast content when it is broadcasted from a channel corresponding to the broadcast channel information at the time recorded in the broadcast time information. Accordingly, the user can record desired broadcast content at a desired time conveniently in the broadcast receiver with a simple key operation.

Alternatively, the reservation-recording information may include a unique identification code assigned to identify broadcast content to be broadcasted in the future.

In this case, the broadcast transmitter transmits broadcast content including the reservation-recording information containing a unique identification code assigned to identify future broadcast content to be broadcasted in the future, while the broadcast receiver extracts the unique identification code contained in the reservation-recording information of the current broadcast content in response to a user's operation, sets a reservation-recording function, and records the future broadcast content when it corresponds to the unique identification code by making reference to broadcast service information of the current broadcast content. Accordingly, the user can record desired broadcast content at a desired time conveniently in the broadcast receiver with a simple key operation.

Meanwhile, examples of the broadcast content include DMB content and analog broadcasting content. The reservation-recording information may be recorded in a data area for broadcast service information contained in broadcast control data or data services.

For example, if the broadcast content is DMB content, the reservation-recording information may be included in a BIFS (Binary Format for Scene) field of a DMB signal, or in a Data field for a data service. The BIFS field is an area for recording information on arranging objects on a display.

Accordingly, when the broadcast transmitter transmits the preview including the reservation-recording information necessary for reservation-recording, a user can record desired broadcast content at a desired time conveniently in the broadcast receiver with a simple key operation.

As apparent from the above description, according to the present invention, a user can record desired broadcast content at a desired time conveniently in the broadcast receiver with a simple key operation.

While the present invention has been described with reference to exemplary embodiments thereof, it will be understood by those skilled in the art that various changes in form and details may be made therein without departing from the scope of the present invention as defined by the following claims.

## Claims

1. A broadcast transmitter transmitting broadcast content including reservation-recording information of future broadcast content to be broadcasted in the future.

2. The broadcast transmitter of claim 1, wherein the broadcast content including the reservation-recording information is a preview for the future broadcast content.

3. The broadcast transmitter of claim 1 or 2, wherein the reservation-recording information includes information on broadcast time and broadcast channel of the future broadcast content.

4. The broadcast transmitter of claim 1 or 2, wherein the reservation-recording information is a unique identification code assigned to identify the future broadcast content.

5. The broadcast transmitter of claim 3, wherein the broadcast content is DMB (Digital Multimedia Broadcasting) content.

6. The broadcast transmitter of claim 5, wherein the reservation-recording information is included in a BIFS (Binary Format for Scene) field of a DMB signal.

7. The broadcast transmitter of claim 5, wherein the reservation-recording information is included in a Data field of the DMB signal.

8. The broadcast transmitter of claim 5, comprising:
an FIC (Fast Information Channel) processor processing FIC data services, multi-control data, and broadcast service information;
a reservation-recording information processor processing so that reservation-recording information can be included in the broadcast service information processed by the FIC processor; and
a broadcast signal generator outputting a DMB signal including the reservation-recording information.

9. The broadcast transmitter of claim 8, further comprising:
a data service processor processing text data;
an audio service processor processing audio data;
a video service processor processing video data;
a main service multiplexer multiplexing the text data processed by the data service processor, the audio data processed by the audio service processor, and the video data processed by the video service processor into an MSC (main service channel); and
a transmission frame multiplexer multiplexing data processed by the FIC processor and data multiplexed into the MSC by the main service multiplexer into a single transmission frame.

10. The broadcast transmitter of claim 9, wherein the broadcast signal generator converts the data multiplexed into the transmission frame by the transmission frame multiplexer into an OFDM (Orthogonal Frequency Division Multiplexing) signal and outputs a DMB signal.

11. The broadcast transmitter of claim 5, comprising:
an FIC processor processing FIC data services, multi-control data, and broadcast service information;
a data service processor processing text data;
a reservation-recording information processor processing so that reservation-recording information can be included in the text data processed by the data service processor; and
a broadcast signal generator outputting a DMB signal including the reservation-recording information.

12. The broadcast transmitter of claim 11, further comprising:
an audio service processor processing audio data;
a video service processor processing video data;
a main service multiplexer multiplexing the text data processed by the data service processor, the audio data processed by the audio service processor, and the video data processed by the video service processor into an MSC; and
a transmission frame multiplexer multiplexing data processed by the FIC processor and data multiplexed into the MSC by the main service multiplexer into a single transmission frame.

13. The broadcast transmitter of claim 12, wherein the broadcast signal generator converts the data multiplexed into the transmission frame by the transmission frame multiplexer into an OFDM signal and outputs a DMB signal.

14. A broadcast receiver which extracts reservation-recording information of future broadcast content to be broadcasted in the future from current broadcast content in response to a user's operation, sets a reservation-recording function, and records the future broadcast content when the future broadcast content is broadcasted.

15. The broadcast receiver of claim 14, wherein the current broadcast content is a preview for the future broadcast content.

16. The broadcast receiver of claim 14 or 15, wherein the reservation-recording information includes information on broadcast time and broadcast channel of the future broadcast content.

17. The broadcast receiver of claim 14 or 15, wherein the reservation-recording information is a unique identification code assigned to identify the future broadcast content.

18. The broadcast receiver of claim 16, wherein the broadcast content is DMB content.

19. The broadcast receiver of claim 17, wherein the broadcast content is DMB content.

20. The broadcast receiver of claim 18, comprising:
a DMB tuner converting a DMB frequency band signal received via an antenna into a baseband orthogonal (I/Q) signal;
a demodulation/error correction unit which selects a channel from the orthogonal (I/Q) signal, extracts original data corresponding to the selected channel, and performs an error correction process on the extracted data to output TS (Transport Stream) data;
a decoder which divides the TS data outputted from the demodulation/error correction unit into an audio signal and a video signal, decodes the divided audio and video signals, and outputs the decoded video and audio signals;
an audio codec converting the decoded audio signal outputted from the decoder into an analog voice signal;
a controller receiving the DMB signal and controlling processing of the DMB signal;
an information extracting unit extracting information necessary for reservation-recording from the TS data outputted from the demodulation/error correction unit in response to a user's operation; and
a reservation recorder which sets a reservation-recording function according to the reservation-recording information extracted by the information extracting unit, records and stores the broadcast content in a memory when the broadcast content is broadcasted.

21. The broadcast receiver of claim 20, wherein the reservation recorder records broadcast content broadcasted via a channel corresponding to the broadcast channel information included in the reservation-recording information at the time recorded in the broadcast time information included in the reservation-recording information, and stores the recorded broadcast content in a memory.

22. The broadcast receiver of claim 19, comprising:
a DMB tuner converting a DMB frequency band signal received via an antenna into a baseband orthogonal (I/Q) signal;
a demodulation/error correction unit which selects a channel from the orthogonal (I/Q) signal, extracts original data corresponding to the selected channel, and performs an error correction process on the extracted data to output TS data;
a decoder which divides the TS data outputted from the demodulation/error correction unit into an audio signal and a video signal, decodes the divided audio and video signals, and outputs the decoded video and audio signals;
an audio codec converting the decoded audio signal outputted from the decoder into an analog voice signal;
a controller receiving the DMB signal and controlling processing of the DMB signal;
an information extracting unit extracting information necessary for reservation-recording from the TS data outputted from the demodulation/error correction unit in response to a user's operation; and
a reservation recorder which sets a reservation-recording function according to the reservation-recording information extracted by the information extracting unit, records and stores the broadcast content in a memory when the broadcast content is broadcasted.

23. The broadcast receiver of claim 22, wherein the reservation recorder determines whether or not current broadcast content corresponds to the assigned unique identification code by making reference to broadcast service information of the current broadcast content, and, if the current broadcast content corresponds to the unique identification code, records and stores the current broadcast content in a memory.

24. A mobile communication terminal equipped with the broadcast receiver of any one of claims 14 to 23.

25. A method of transmitting a broadcast signal in a broadcast transmitter, the method comprising the operations of:
including reservation-recording information of future broadcast content, which is to be broadcasted in the future, in current broadcast content; and
transmitting the current broadcast content including the reservation-recording information.

26. The method of claim 25, wherein the broadcast content including the reservation-recording information is a preview for the future broadcast content.

27. The method of claim 25 or 26, wherein the reservation-recording information includes information on broadcast time and broadcast channel of the future broadcast content.

28. The method of claim 25 or 26, wherein the reservation-recording information is a unique identification code assigned to identify the future broadcast content.

29. The method of claim 27, wherein the broadcast content is DMB content.

30. The method of claim 29, wherein the reservation-recording information is included in a BIFS field of a DMB signal.

31. The method of claim 29, wherein the reservation-recording information is included in a Data field of the DMB signal.

32. A method of performing reservation-recording in a broadcast receiver, the method comprising the operations of:
extracting reservation-recording information of future broadcast content, which is to be broadcasted in the future, from current broadcast content in response to a user's operation;
setting a reservation-recording function according to the reservation-recording information; and
recording the future broadcast content when the future broadcast content is broadcasted.

33. The reservation-recording method of claim 32, wherein the current broadcast content is a preview for the future broadcast content.

34. The reservation-recording method of claim 32 or 33, wherein the reservation-recording information includes information on broadcast time and broadcast channel of the future broadcast content.

35. The reservation-recording method of claim 32 or 33, wherein the reservation-recording information is a unique identification code assigned to identify the future broadcast content.

36. The reservation-recording method of claim 34, wherein the current broadcast content is DMB content.

37. The reservation-recording method of claim 35, wherein the current broadcast content is DMB content.
